# EUROPEAN PATENT APPLICATION

(11) **EP 4 420 763 A1**
(43) Date of publication of application: **28.08.2024**
(21) Application number: 23157998.8
(22) Date of filing: 22.02.2023
(51) Int. Cl.: B01D 53/62, B01D 53/81, B01J 20/30, C04B 7/36, B01D 53/83, B01D 53/02, B01J 2/00

(54) **A METHOD FOR MECHANOCHEMICAL CARBON SEQUESTRATION OF SOLID FEEDSTOCKS FROM A SINGLE GAS SOURCE**

(71) Applicant: Carbon Upcycling Technologies Inc., Calgary, AB T3S 0A2 (CA)
(72) Inventor: SINHA, Apoorva, T3S 0A2 Calgary (CA); GASCOYNE, Owen, T3S 0A2 Calgary (CA)
(74) Representative: Nederlandsch Octrooibureau

(57) **Abstract**

The present invention relates to a method for the mechanochemical sequestration or capture of carbon from CO₂ in solid feedstocks, the method comprising contacting a first carbon-rich gas with the solid feedstock in a size reduction apparatus such as a mill, followed by submitting the carbonated feedstock to a second carbon sequestration step by contacting it with a second carbon-rich gas. The first and second carbon-rich gas are both obtained from a combustion flue gas or a cement kiln flue gas.

## Description

### Field of the invention

The present invention relates to a method for the mechanochemical sequestration or capture of carbon from CO₂ in solid feedstocks and uses thereof.

### Background art

Anthropogenic emissions have increased carbon dioxide concentrations in the atmosphere to at least 30% more than Pre-Industrial Era levels. Moreover, it is estimated that future global carbon dioxide emissions will increase from about 7.4 GcC (billions of tons of atmospheric carbon) per year, which was the level in 1997, to 26 GtC per year by 2100. The adverse environmental impact linked with increased carbon dioxide emissions has resulted in more stringent environmental standards regarding emissions of pollutants into the atmosphere.

The management of carbon dioxide emissions can be achieved by: increasing the efficiency of energy conversion, using low-carbon or carbon-free energy sources, as well as the capture and sequestration of carbon dioxide emissions. The sequestration of carbon dioxide, remains the preferred method for tackling antecedent carbon dioxide emissions.

Mineral carbonation is a sequestration process in which minerals, such as olivine and serpentine, or calcium-rich minerals, react with carbon dioxide to form geologically stable mineral carbonates. These processes mimic the naturally occurring weathering of rocks.

The mineral carbonation approach has several inherent advantages, including a vast natural abundance of raw materials and the permanent and benign storage of CO₂ in solid form. The primary drawback to mineral carbonation has been the reaction kinetics, because these naturally occurring processes happen slowly over geological timeframes instead of industrial time scales. Previous studies have suspended minerals in aqueous carriers, because such systems have been shown to have faster kinetics than direct carbonation. The mineral aqueous mineral carbonation step involves the leaching of magnesium, calcium or another suitable metal or combination of metals and the subsequent reaction with dissolved hydrogen carbonate. A disadvantage of aqueous methods is that the resulting aqueous product or slurry needs to be used on-site to avoid expensive and energy-inefficient transportation or evaporation.

Sequestration employing solids has been achieved by crushing magnesium-rich minerals to a fine particle size to promote surface reactions that are known to control most mineral dissolution reactions. Such processes have been hampered by extensive comminution of the raw materials, high partial pressures and long reaction times, all of which render the process energy intensive. Other studies have also reported that preheating the serpentine minerals to about 650 °C significantly increases their carbonation reactivity, probably due to dehydroxylation, increase in the surface area and destabilization of the crystal structure. However, this pre-treatment is very energy intensive, requiring around 200 kWh/ton of serpentine.

Hence, there remains a need to develop a streamlined, low-temperature and energy-efficient process which can capture carbon dioxide into CO₂-related functional groups across a wide variety of raw materials and which is performed on economically viable timeframes.

US2008277319A1 discloses a method for the sequestration and transformation of carbon dioxide generated by anthropogenic sources. The method comprises the steps of size-selecting mineral particles and combining it with water to form a slurry which is then reacted with carbon dioxide.

US6543709B2 discloses a gravity flow air classifying mill. The mill comprises a particle return manifold for returning oversized particles to the mill house.

WO2021087606A1 discloses ball milling methods for mechanochemical CO₂ sequestration in mineral feedstocks.

It is an object of the present invention to provide an improved process for sequestering carbon dioxide into solid feedstocks.

It is a further object of the present invention to provide a process for sequestering carbon dioxide into solid feedstocks which is energy efficient and can preferably be operated as a continuous process.

### Summary of the invention

The present inventors have found that the sequestration of CO₂ can be achieved in a highly-efficient manner for a large variety of feedstocks when considering such factors as energy consumption, carbon sequestration capacity, and reactor throughput capacity, if a mechanochemical sequestration method with at least two carbon sequestration steps is applied to solid feedstocks wherein a CO₂-rich hot gas stream, like a flue gas, is optimally used by splitting it into two substreams or portions which are processed differently and each employed in one of the carbon sequestration steps. The first substream is cooled by mixing with air. While this lowers the CO₂ content, it allows for cooling with a very low energy cost and is ideal for use in a high flow-rate first carbon sequestration step, like milling in an air classifier mill which is fed with a carbon-rich gas. The second substream is cooled by heat-exchange. This is more energy-intensive but allows the CO₂ content to be maintained, which is ideal for using the gas in the second carbon sequestration step, after activation of the material in the first step (which comprises a size-reduction), to achieve high CO₂ uptake. The amount of gas required in the second step is typically much lower than the amount of gas required to operate an air classifier mill. Another advantage is that by mixing the first substream with air to provide the first carbon-rich gas, a lower flow of flue gas is required to operate the same size-reduction apparatus (e.g. an air-classifier mill) such that the space and cost required to build ducting from an existing flue gas source to the size-reduction apparatus is reduced, facilitating retrofitting of existing plants. The methods can be optimally combined with a continuous size-selection method as described herein. It was found that the method can conveniently be coupled to existing flue gas streams, such as fossil fuel flue gas combustion streams or cement kiln flue gas, allowing point-source emissions to be captured.

Hence, in a first aspect, the present invention provides a continuous method for carbon sequestration comprising the steps of:
(i) providing a solid feedstock having a first moisture content;
(ii) providing a first carbon-rich gas comprising at least 1 vol% CO₂ and a second carbon-rich gas comprising at least 1 vol% CO₂;
(iii) subjecting the solid feedstock of step (i) in a size-reduction apparatus to a size-reduction operation in the presence of the first carbon-rich gas of step (ii) to obtain a first CO₂-enriched material and recovering the first CO₂-enriched material;
(iv) optionally increasing the moisture content of said first CO₂-enriched material to a second moisture content higher than the first moisture content to obtain wetted CO₂-enriched material;
(v) submitting the optionally wetted CO₂-enriched material to a further CO₂-enrichment treatment outside the size-reduction apparatus by contacting it with the second carbon-rich gas comprising at least 1 vol% CO₂; to obtain a second CO₂-enriched material and recovering the second CO₂-enriched material;
   wherein step (ii) comprises the steps
   (ii)a providing a gas stream comprising at least 1 vol% CO₂ and having a temperature of more than 120 °C, which is preferably combustion flue gas or cement kiln flue gas;
   (ii)b splitting the gas stream of step (i)a into a first portion and a second portion;
   (ii)c cooling said first portion, the cooling comprising mixing the first portion with air, thereby obtaining the first carbon-rich gas; and
   (ii)d cooling said second portion, thereby obtaining the second carbon-rich gas;
   wherein the CO₂ content of the first carbon-rich gas is lower than the CO₂ content of the second carbon-rich gas,
   wherein steps (ii)c and (ii)d each optionally comprise a step of adjusting the humidity of the gas.

The method of the present invention can be applied to a variety of solid feedstocks including but not limited to feedstocks comprising fly ash, clay, silicate minerals, crushed glass, steel slags, natural pozzolans, volcanic rock, biochar and mining tailings, as is described herein in more detail elsewhere.

The temperature of the first carbon-rich gas may be within the range of 20-300 °C. The temperature of the second carbon-rich gas is preferably below 120 °C, preferably below 100 °C. In some embodiments the temperature of the first carbon-rich gas is higher than the temperature of the second carbon-rich gas.

In preferred embodiments of the invention, less than 70 vol%, more preferably less than 60 vol%, more preferably less than 50 vol% of the first carbon-rich gas constitutes the gas of the first portion. Similarly, it is preferred that at least 30%, preferably at least 40%, more preferably at least 50% of the first carbon-rich gas constitutes air. In other words, step (ii)c preferably comprising mixing the first portion of the gas stream of step (i)a with air in a volume:volume ratio of 70:30 or less, preferably 60:40 or less, more preferably 50:50 or less.

The method of any one of the previous claims, preferably of claim 4, wherein at least 70 vol%, more preferably at least 80 vol%, more preferably at least 95 vol% of the second carbon-rich gas constitutes the gas of the second portion.

The first moisture content is preferably less than 8 wt.% (by total weight of the solid feedstock), preferably less than 5 wt.% (by total weight of the solid feedstock) and the second moisture content is preferably more than 10 wt.% (by total weight of the wetted CO₂-enriched material). The present inventors have surprisingly found that the second moisture content is preferably less than 35 wt.% (by total weight of the wetted CO₂-enriched material), preferably less than 27 wt.% (by total weight of the wetted CO₂-enriched material), most preferably less than 20 wt.% (by total weight of the wetted CO₂-enriched material), since above these levels reduced efficiencies are observed, in particular in case the CO₂-enrichment of step (v) is a process wherein no further size reduction occurs, as is described herein elsewhere. Since the materials have been ground or milled in step (iii), for example to a particle size as described herein elsewhere, high moisture contents such as the 35 wt.% mentioned above can be accommodated without turning into a slurry (which in turn facilitates material handling). Without wishing to be bound by any theory, the present inventors believe that the reduced efficiency observed in case the moisture content of the solid during step (v) is too high is because too much surface of the material is covered by water, creating a diffusion boundary layer for carbonation.

The method of the present invention is performed using gas streams comprising dilute carbon dioxide streams, such as on point source emissions originating from e.g. combustion (in particular fossil fuel combustion) or cement kiln flue gas.

In highly preferred embodiments of the present invention, the size reduction operation of step (iii) is performed by subjecting the solid feedstock of step (i) in the presence of the first carbon-rich gas to milling, preferably roller milling, such as in particular roller milling in a vertical roller mill.

In highly preferred embodiments of the invention, step (iii) is performed by a mill, preferably a vertical roller mill, with an integrated air classifier or an air classifier placed downstream of the mill. In preferred embodiments of the invention, the gas flow through the air classifier comprises, preferably consists of, the first carbon-rich gas provided in step (ii). In some embodiments, the air classifier is placed downstream of the mill, wherein the gas flow through the air classifier comprises, preferably consists of, the first carbon-rich gas of step (ii). In all embodiments, typically the gas flows from the milling area to the air classifier. It will be understood by the skilled person that while the terminology "air classifier mill" is used to denote the apparatus commonly known as an air classifier mill, it is not air but the first carbon-rich gas which flows through the mill.

It was found that the carbon dioxide sequestration process of the invention is energy efficient. In some embodiments, the method of the present invention is provided wherein the total power consumption represented by steps (iii)-(v) is less than 200 Wh per kg of second CO₂-enriched material recovered in step (v), preferably less than 175 Wh, more preferably less than 150 Wh.

In some embodiments of the invention, the second CO₂-enriched material recovered in step (v) exhibits at least one, preferably two and most preferably three of the following characteristics:
- a D10 within the range of 0.005 to 3 µm;
- a D50 within the range of 0.1 to 100 µm, preferably within the range of 0.1 to 40 µm, more preferably within the range of 1-40 µm, most preferably within the range of 5-40 µm;
- a D90 within the range of 0.5 to 300 µm
- a BET surface area within the range of 0.5 to 10000 m²/g.

### Brief Description of the Figures

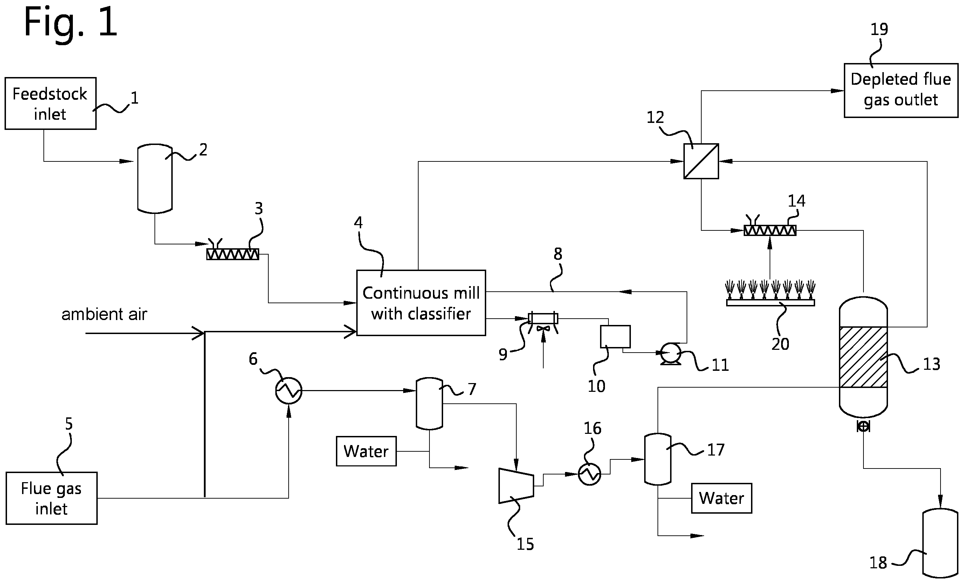

Fig.1 shows a process flow diagram for a method of the invention wherein step (iii) of the method is performed via milling in an air classifier mill, wherein the further CO₂-enrichment treatment step (v) of the method comprises storing the CO₂-enriched material in a container under a continuous flow of flue gas. A point source emission like a combustion flue gas or cement kiln flue gas is split into a first portion and a second portion. The first portion is cooled by mixing with air, and provided to the air classifier mill (running on this mixture of air and flue gas), while the second portion is cooled by heat-exchange and provided to the treatment of step (v).

### Description of embodiments

The expression "comprise" and variations thereof, such as, "comprises" and "comprising" as used herein should be construed in an open, inclusive sense, meaning that the embodiment described includes the recited features, but that it does not exclude the presence of other features, as long as they do not render the embodiment unworkable.

The expressions "one embodiment", "a particular embodiment", "an embodiment" etc. as used herein should be construed to mean that a particular feature, structure or characteristic described in connection with the embodiment is included in at least one embodiment. Thus, the appearances of such expressions in various places throughout this specification do not necessarily all refer to the same embodiment. Furthermore, the particular features, structures, or characteristics may be combined in any suitable manner in one or more embodiments. For example, certain features of the disclosure which are described herein in the context of separate embodiments are also explicitly envisaged in combination in a single embodiment.

The singular forms "a," "an," and "the" as used herein should be construed to include plural referents unless the content clearly dictates otherwise. It should also be noted that the term "or" is generally employed in its broadest sense, that is as meaning "and/or" unless the content clearly dictates otherwise.

The term "CO₂-enriched material" is used herein to refer to the solid feedstock after being contacted with CO₂ during the size-reduction operation of step (iii) or the further CO₂-enrichment treatment of step (v). Depending on the feedstock, the physical and/or chemical mechanism underlying the CO₂ sequestration may be different. For example, in case the feedstock comprises a mineral the CO₂ will typically be converted to carbonates (also referred to as carbonation). In case the feedstock comprises elemental carbon, (such as graphite), the CO₂ will typically be bonded to the carbon in the form of various functional groups including carboxylates, epoxides, carbonyl groups, etc.

In accordance with the invention, the BET surface area as referred to herein is determined at a temperature of 77K using a sample mass of 0.1-0.5g. The BET surface area as referred to herein is determined using nitrogen. A preferred analysis method to determine the BET surface area comprises heating samples to 400 °C for a desorption cycle prior to surface area analysis. A suitable and thus preferred analysis apparatus for determining the BET surface area is a Micromeritics Gemini VII 2390 Surface Analyzer preferably equipped with a Micromeritics FlowPrep 060 flowing-gas degassing unit.

TGA as used herein refers to Thermogravimetric Analysis, a technique known to the person skilled in the art. A preferred TGA setup to determine the CO₂ content of the feedstocks and carbonated materials in the context of the present invention is a Setaram TAG 16 TGA/DSC dual chamber balance employing a 0.1-2 mg sample. In accordance with the invention, the TGA is performed under an inert atmosphere, such as nitrogen or argon.

In accordance with the invention, unless specified otherwise, the particle size distribution characteristics referred to herein such as D10, D50 and D90 as well as the specific surface area (unless explicitly mentioned to be BET surface area) are determined by measuring with a laser light scattering particle size analyzer utilizing the Mie theory of light scattering, such as the Brookhaven laser particle sizer, Model Microbrook 2000LD or another instrument of equal or better sensitivity and reporting the data using a volume equivalent sphere model. As is known to the skilled person, the D50 is the mass median diameter, i.e. the diameter at which 50% of a sample's mass is comprised of smaller particles. Similarly, the D10 and D90 represent the diameter at which 10 or 90% of a sample's mass is comprised of smaller particles.

The Total Carbon (TC) content referred to herein is preferably determined in accordance with the method described on Soil Sampling and Methods of Analysis, 2nd Ed., CRC Press (2008), p. 244 and further, incorporated herein by reference. The Total Carbon (TC) content is always expressed herein as wt.% based on the total weight of the composition being measured. For example, in case the total carbon content of the solid feedstock is referred to, it is based on the total weight of the solid feedstock, in case the total carbon content of the CO₂ enriched material is referred to, it is based on the total weight of the CO₂-enriched material.

The moisture content of the solid materials referred to herein (e.g. the solid feedstock provided in step (i) of the method, and the wetted CO₂-enriched material obtained in step (iv)) refers to the moisture content determined by oven-drying the material at 150 °C until constant weight and comparing the initial weight with the dry weight.

For the purposes of the present disclosure, ideal gas law is assumed such that the mol% of a gas is considered as equal to the vol%.

### Process description

In a first aspect, the invention provides a method for carbon sequestration comprising the steps of:
(i) providing a solid feedstock having a first moisture content;
(ii) providing a first carbon-rich gas comprising at least 1 vol% CO₂ and a second carbon-rich gas comprising at least 1 vol% CO₂;
(iii) subjecting the solid feedstock of step (i) in a size-reduction apparatus to a size-reduction operation in the presence of the first carbon-rich gas of step (ii) to obtain a first CO₂-enriched material and recovering the first CO₂-enriched material;
(iv) optionally increasing the moisture content of said first CO₂-enriched material to a second moisture content higher than the first moisture content to obtain wetted CO₂-enriched material;
(v) submitting the optionally wetted CO₂-enriched material to a further CO₂-enrichment treatment outside the size-reduction apparatus by contacting it with the second carbon-rich gas comprising at least 1 vol% CO₂; to obtain a second CO₂-enriched material and recovering the second CO₂-enriched material;
   wherein step (ii) comprises the steps
   (ii)a providing a gas stream comprising at least 1 vol% CO₂ and having a temperature of more than 120 °C, which is preferably combustion flue gas or cement kiln flue gas;
   (ii)b splitting the gas stream of step (i)a into a first portion and a second portion;
   (ii)c cooling said first portion, the cooling comprising mixing the first portion with air, thereby obtaining the first carbon-rich gas; and
   (ii)d cooling said second portion, thereby obtaining the second carbon-rich gas;
   wherein the CO₂ content of the first carbon-rich gas is lower than the CO₂ content of the second carbon-rich gas,
   wherein steps (ii)c and (ii)d each optionally comprise a step of adjusting the humidity of the gas.

In some embodiments of the invention, the method is provided wherein at least step (iii), preferably steps (iii)-(v) are performed in continuous mode. The term continuous is to be interpreted as a process in which the production of the first CO₂-enriched material is performed continuously by continuous processing of the size-reduction operation. The continuous process thus continuously outputs first CO₂-enriched material over a given period of time. Preferably, steps (iv) and (v) are also performed continuously, such that the process continuously outputs second CO₂-enriched material over a given period of time. This is in contrast to batch processing wherein there is no continuous output of CO₂-enriched material but rather a discrete portion ("batch") which is treated for a time until the complete batch is fully processed all at once. Even if at least step (iii), preferably steps (iii)-(v) are performed in continuous mode, some other steps may still be performed in batch mode. For example, the solid feedstock of step (i) may be stored in a silo and continuously fed to the size-reduction apparatus and submitted to steps (iii)-(v) in a continuous manner. Alternatively, a discrete portion of solid feedstock can be loaded all into the size-reduction apparatus, after which it is submitted to steps (iii)-(v) in a continuous manner such that second CO₂-enriched material is continuously recovered over a given period of time until the discrete portion of feedstock in the size-reduction apparatus is spent. A hybrid of these two forms can also be envisaged, wherein discrete portions of solid feedstock are continuously fed (according to a regular or irregular pattern) into the size-reduction apparatus. In all of these described cases, step (iii) is considered to be continuous since the output of first CO₂-enriched material is continuous over a given period of time. In case only step (iii) is performed in continuous mode, the continuously produced first CO₂-enriched material may be collected into a buffer storage, like a buffer silo, until it is submitted to steps (iv) and (v) in a batch-wise manner. Alternatively, steps (iv) and (v) are also continuously performed. In the latter case, a buffer storage, like a buffer silo, may still be employed to absorb differences in processing capacity of steps (iii) and (v). In some embodiments of the invention, the method is operated such that first CO₂-enriched material is continuously recovered over a period of at least 1 minute, preferably at least 10 minutes, more preferably at least 30 minutes. In preferred embodiments of the invention, the method is operated such that the first CO₂-enriched material is continuously recovered over a period of at least 1 hour, preferably at least 4 hours, more preferably at least 8 hours. In more preferred embodiments of the invention, the method is operated such that first and second CO₂-enriched materials are continuously recovered over a period of at least 1 minute, preferably at least 10 minutes, more preferably at least 30 minutes. In more preferred embodiments of the invention, the method is operated such that the first and second CO₂-enriched materials are continuously recovered over a period of at least 1 hour, preferably at least 4 hours, more preferably at least 8 hours.

As will be understood by the skilled person, step (iii) is performed in the presence of the first carbon-rich gas provided in step (ii), meaning that the solid feedstock of step (i) contacts the first carbon-rich gas provided in step (ii) during the size-reduction operation of step (iii), such that CO₂ sequestration into the solid feedstock can take place, for example by carbonation, oxidation, etc.

As with any chemical process, the appropriate reaction parameters such as residence time in the size-reduction apparatus, temperature, pressure, etc. are highly dependent on the extent of CO₂-sequestration desired, the surface area desired, etc. and can routinely be determined by sampling material on a regular basis and monitoring reaction progress e.g. via BET analysis, particle size analysis and Total Carbon determination as explained herein.

The gas stream of step (ii)a of the method described herein may be any gas stream comprising significant amounts of CO₂. It will be understood by the skilled person that the composition of the first and second carbon-rich gas may change as the reaction progresses but that continuous replenishment may be provided by e.g. a continuous flow of fresh gas through steps (iii) and (v) of the method. Coupled with a continuous supply of solid feedstock, this allows the method to operate in continuous mode. In view of the CO₂ sequestration happening throughout the process, the gas will have a lower CO₂ concentration after each of steps (iii) and (v) of the method compared to the gas entering steps (iii) and (v) of the method respectively. The expression "in the presence of the first carbon-rich gas" in step (iii) should be construed to mean that the atmosphere inside the size-reduction apparatus consists essentially of the first carbon-rich gas provided in step (ii) throughout operating the method.

In highly preferred embodiments of the method described herein, the gas stream of step (ii)a comprises or consists of a combustion flue gas and/or a cement kiln gas. In embodiments of the method described herein the gas stream of step (ii)a comprises a combustion flue gas, in particular a flue gas from fossil fuel combustion, wood pellet combustion, biomass combustion or municipal waste combustion. Fossil fuel combustion may be coal, petroleum coke, petroleum, natural gas, shale oil, bitumens, tar sand oil, or heavy oils combustion, or any combination thereof. The combustion flue gas may optionally have been treated to reduce the water content, the SO₂ content, and/or the NOx content. In embodiments of the method described herein, the gas stream of step (ii)a comprises a cement kiln flue gas. Typically cement kiln flue gas will comprise a fossil fuel combustion flue gas as cement kilns are typically heated by fossil fuel combustion, typically additionally enriched with CO₂ originating from the limestone calcination happening inside the cement kiln for the purpose of cement manufacturing. The cement kiln flue gas may optionally have been treated to reduce the water content, the SO₂ content, and/or the NOx content.

The CO₂ concentration in the gas stream of step (ii)a is preferably at least 2 vol%, more preferably at least 3 vol%. Typical CO₂ concentrations for combustion flue gas and cement kiln flue gas are in the range of 1-20 vol%, such as 2-15 vol% or 2-5 vol% or 5-15 vol%, such that it is preferred that the gas stream of step (ii)a has a CO₂ concentration in the range of 1-20 vol%, such as 2-15 vol% or 2-5 vol% or 5-15 vol%.

By splitting the gas stream of step (i)a into two portions as described herein, significant energy savings and optimizes CO₂ utilisation are achieved. In particular in case it is combined with air classifier milling as described herein elsewhere, which requires a high gas flow rate. In this way, the amount of cooling energy expended on the gas stream for the air classifier is limited because the cooling is at least partially provided by mixing with air, while the gas stream for step (v) can avoid being diluted by air, thereby maintaining its CO₂ concentration allowing improved carbonation efficiency. Another advantage is that by mixing the first substream with air to provide the first carbon-rich gas, a lower flow of flue gas is required to operate the same size-reduction apparatus (e.g. an air-classifier mill) such that the space and cost required to build ducting from an existing flue gas source to the size-reduction apparatus is reduced, facilitating retrofitting of existing plants. With these methods, additional flow rate into step (iii) can easily be provided, which is important in case an air classifier mill is used. While this is not necessary, for balancing the process the second portion may further be mixed with other gas streams in order to provide the second carbon-rich gas, such as gas recovered from the size-reduction apparatus in step (iii), air, or a concentrated gas comprising at least 30 vol% CO₂, such as at least 80 vol% CO₂ as the second carbon-rich gas. Step (ii) preferably does not comprise mixing the second portion with air. It is preferred that at least 70 vol%, more preferably at least 80 vol%, more preferably at least 95 vol% of the second carbon-rich gas constitutes the gas of the second portion, optionally after a step of adjusting the humidity of the gas. In some embodiments the second carbon-rich gas contacting the optionally wetted CO₂-enriched material consists essentially of the gas of the second portion, optionally after a step of adjusting the humidity of the gas. Step (ii)c preferably comprises mixing the first portion with air such that less than 95 vol%, more preferably less than 90 vol%, more preferably less than 85 vol% of the first carbon-rich gas constitutes the gas of the first portion, optionally after a step of adjusting the humidity of the gas. Depending on the temperature of the flue gas provided in step (ii)a and the desired temperature of the first carbon-rich gas, an even larger portion of air may be mixed, for example such that less than 80 vol%, less than 70 vol%, or less than 60 vol% of the first carbon-rich gas constitutes the gas of the first portion, optionally after a step of adjusting the humidity of the gas. Typically at least 30 vol%, preferably at least 40 vol% of the first carbon-rich gas constitutes the gas of the first portion. Since air-mixing is performed for the purpose of cooling, it will be clear that the air provided in step (ii)c for mixing with the first portion has a temperature lower than the temperature of the gas stream provided in step (ii)a, such as a temperature of less than 80 °C, preferably a temperature of less than 40 °C.

The ratio of the CO₂ content of the second carbon-rich gas to the CO₂ content of the first carbon-rich gas is preferably at least 1.3:1, preferably at least 1.5:1, more preferably at least 1.7:1.

In some embodiments of the invention providing a second carbon-rich gas comprising at least 1 vol% CO₂ in step (ii) comprises recovering the gas from the size-reduction apparatus of step (iii) and providing it to form at least part of the second carbon-rich gas in step (v), optionally after a step of adjusting the humidity of the gas. In such embodiments, the first carbon-rich gas provided in step (ii) of the method described herein is thus first used in step (iii) of the method, combined with the second portion of the gas stream of step (i)a, and subsequently used in step (v) of the method. Typically, for example in case a mill with an air classifier is used for step (iii), the flow rate of the gas through step (iii) of the process is much higher than the amount of gas (or flow rate) required by step (v) of the process, such that only a small portion of the gas recovered from the size-reduction apparatus in step (iii) is used in step (v). If this embodiment is used, in order to keep the CO₂ content of the second carbon-rich stream high, it is preferred that less than 30 vol%, more preferably less than 20 vol% of the second carbon-rich gas constitutes the gas recovered from the size-reduction apparatus of step (iii).

The cooling of step (ii)d can be effected by any cooling means known to the skilled person, including a heat-exchanger (e.g. with ambient air or coolant), passive cooling, and/or jacket cooling. With passive cooling is meant that the piping transporting the flue gas allows for sufficient heat-exchange with ambient air to cool the hot flue gas. In practice this can be achieved by e.g. increasing piping length, decreasing piping diameter, not insulating the piping etc. Jacket cooling may comprise running a coolant fluid through a jacket placed around the piping transporting the flue gas. The coolant fluid used in the heat-exchanger or the jacket may be any known coolant, including regular water, or a coolant having a freezing point of less than -5 °C, preferably less than -10°C, (typically an aqueous coolant comprising one or more glycols and one or more anticorrosion agents). The cooling is preferably effected by a heat-exchanger and/or jacket cooling. The cooling is preferably performed to a temperature of below 120 °C, preferably below 100 °C, preferably below 90 °C, more preferably below 80 °C, most preferably below 70 °C. The cooling of step (ii)d comprises at least one different cooling means than the cooling of step (ii)c (which comprises or may even consist essentially of cooling by mixing with air). For example, the cooling of step (ii)d preferably comprises cooling by a heat-exchanged and/or jacket cooling (techniques which do not substantially affect the gas composition). After the cooling of steps (ii)c and/or (ii)d it may be desirable to perform a further step wherein the cooled flue gas is submitted to a liquid-gas separation step (e.g. using a dehumidifier, demisting pad, or similar equipment) to remove water droplets and/or decrease the moisture content of the cooled flue gas, or to perform a humidification step (depending on the humidity of the flue gas source and the composition of other gases mixed to prepare the first and second carbon-rich gas). In any scenario it is preferred that the temperature of the gas fed to the size-reduction apparatus is at least 1 °C above the dew point inside the size-reduction apparatus, preferably within 1-20 °C above the dew point, such that the moisture content of the solid phase can more easily be controlled.

In some embodiments, step (ii)a comprises combustion of a fuel as described herein elsewhere, thereby obtaining a hot combustion flue gas with a temperature of more than 120 °C, preferably more than 150 °C, preferably more than 190 °C. In some embodiments, step (ii)a comprises calcining limestone, thereby obtaining a hot flue gas with a temperature of more than 120 °C, preferably more than 150 °C, preferably more than 190 °C.

The size reduction operation of step (iii) may comprise grinding, milling, mixing, stirring (such as low-speed stirring or high-speed stirring), shearing (such as high-torque shearing), shaking, blending, pulverizing, powderizing, crushing, crumbling, a fluidized bed or ultrasonication, preferably grinding, milling, mixing, stirring (such as low-speed stirring or high-speed stirring), shearing (such as high-torque shearing), or ultrasonication.

In preferred embodiments of the present invention, the size-reduction operation of step (iii) is performed by subjecting the solid feedstock of step (i) in the presence of the gas of step (ii) to milling, preferably ball milling, roller milling, basket milling, hammer milling, rotor-stator milling, pin milling, jet milling and/or rod milling, preferably ball milling or roller milling, most preferably roller milling. Accordingly, in preferred embodiments, the size-reduction apparatus is a mill. In highly preferred embodiments the size-reduction apparatus is a ball mill or a roller mill, preferably a roller mill. The roller mill is typically a vertical roller mill. Hence, in highly preferred embodiments of the invention, the size-reduction operation of step (iii) is performed by subjecting the solid feedstock of step (i) in the presence of the first carbon-rich gas of step (ii) to roller milling, preferably in a vertical roller mill. A roller mill is known to the skilled person and typically comprises a housing having a substantially cylindrical or cone-shaped part in which one or more rollers are placed in close proximity to the housing such that upon rotation of the rollers, feedstock in the mill is crushed and/or ground between the rollers and the housing. The feedstock may for example be provided to any of the mills described herein (in particular the vertical roller mills) as a solid which is simply dropped into the mill (e.g. using a conveyor belt or similar system) or in case the particle size of the feedstock is sufficiently small, carried by the first carbon-rich gas provided in step (ii). In a vertical roller mill, the action of centrifugal force will move the material to the mill edge where it is ground and/or crushed.

In some embodiments of the present invention, in particular in the case of ball milling, the size reduction operation can be carried out by rotating the size-reduction apparatus containing the solid feedstock and the gas in the presence of grinding or milling media (e.g. balls or beads). A preferred material is stainless steel or aluminium oxide. For example, grinding or milling media can be made from steel (e.g. AISI H13, modified H10), aluminium oxide, chrome white cast irons (e.g. ASTM A532), molybdenum steel (e.g. AISI M2, M4, M-42), chromium-based steels (e.g. H11, H12, H13 CPM V9, ZDP-189) or other media with a HRC hardness of 60 or more. Such grinding media can be utilized with or without surface treatments such as nitriding and carburizing. This can conveniently be performed in a rotating drum.

The present inventors have furthermore found that the size reduction operation of step (iii) described herein may advantageously be performed without employing additional oxidizing agents such as acids. Hence, the mechanochemical carbon sequestration methods described herein are preferably performed without employing a strong acid, preferably without employing any further oxidizing agent other than the gas provided in step (ii).

In embodiments of the method described herein, in order to stimulate carbonation, step (v) is performed at a temperature of less than 120 °C, preferably less than 100 °C, preferably less than 90 °C, more preferably less than 85 °C. In preferred embodiments of the invention, steps (iii) and (v) are performed at a temperature of at least 30 °C, preferably at least 35 °C, preferably at least 38 °C. The inventors have found that good carbonation can still be achieved even if the size-reduction operation of step (iii) is performed at higher temperatures, as long as the temperature during step (v) is optimized. Thus in particularly preferred embodiments step (v) is performed at a temperature within the range of 30-85 °C, preferably 30-55 °C, most preferably 35-50 °C, such as 35-45°C or about 40 °C. As is shown in the appended examples, these temperatures allow improved carbonation efficiencies to be achieved, in particular in case a slag as described herein is used as a solid feedstock. The size-reduction operation of step (iii) may be performed at any temperature, such as a temperature within the range of 20-300 °C, including at a temperature of more than 120 °C, or even more than 150 °C. Such high temperatures may arise when a very hot flue gas is used which remains at a high temperature even after cooling by mixing with air, or when a lot of temperature increase due to friction occurs. In some embodiments, the temperature during step (iii) is also less than 120 °C, preferably less than 100 °C, preferably less than 90 °C, more preferably less than 85 °C. In preferred embodiments of the invention, no active heating is applied and any increase in temperature is attributed to the temperature of the incoming gas, friction resulting from the size reduction operation or to exothermic reactions taking place during the mechanochemical carbonation. The temperature is preferably determined on the solid material during processing. In some embodiments, active cooling is applied to the size-reduction apparatus, for example by providing a cooling jacket around the housing of the size-reduction apparatus. The coolant fluid used in the jacket may be any known coolant, including regular water, or a coolant having a freezing point of less than -5 °C, preferably less than -10°C, (typically an aqueous coolant comprising one or more glycols and one or more anticorrosion agents). In all embodiments of the invention it is preferred that the second carbon-rich gas has a temperature within the range of 30-85 °C, preferably within the range of 30-55 °C, most preferably within the range of 35-50 °C, such as within the range of 35-45°C or about 40 °C when it is contacted with the optionally wetted CO2-enriched material in step (v).

The low temperature requirement of the present process means that no fossil fuels are required, and electric heating means (or low caloric value green fuel sources) can realistically be used to supply heat in case friction caused by the size reduction operation and/or the temperature of the gas feed is insufficient to reach the desired temperature. In this way, fossil fuels can be avoided throughout the whole production chain.

As will be clear from the present description, steps (iii) and (v) are a substantially dry process. While the present inventors have found that moisture control of the solid phase provides unique advantages, steps (iii) and (v) are not performed on an aqueous solution or slurry. The present inventors have found that this greatly improves energy efficiency (as no water has to be removed afterwards) and imparts unique properties on the resulting mechanochemically carbonated solid feedstocks, yielding materials which are substantially different from e.g. aqueous carbonation materials.

The common assumption when working with flue gas for carbon sequestration with regard to moisture control is that the flue gas temperature should be kept above the dew point (preventing condensation). The present inventors have surprisingly found that it is the moisture content of the solid feedstock which is decisive for the overall efficiency of the operations. In particular, in case a two-step (or more) carbon sequestration process as described herein is performed, it is desirable to specifically control the moisture content during the first carbon sequestration and size-reduction step to be below the moisture content during the second carbon sequestration step.

The first moisture content is preferably less than 8 wt.% (by total weight of the solid feedstock), preferably less than 5 wt.% (by total weight of the solid feedstock), and the second moisture content is preferably more than 10 wt.% (by total weight of the wetted CO₂-enriched material). The present inventors have surprisingly found that the second moisture content is preferably less than 35 wt.% (by total weight of the wetted CO₂-enriched material), preferably less than 27 wt.% (by total weight of the wetted CO₂-enriched material), most preferably less than 20 wt.% (by total weight of the wetted CO₂-enriched material), since above these levels reduced efficiencies are observed, in particular in case the CO₂-enrichment of step (v) is a process wherein no further size reduction occurs, as is described herein elsewhere.

The step (iv) of increasing the moisture content of the first CO₂-enriched material to a second moisture content higher than the first moisture content to obtain wetted CO₂-enriched material may be performed by any means known to the skilled person. Preferably, step (iv) comprises spraying an aqueous composition, such as water, on the first CO₂-enriched material; and/or step (iv) comprises controlling the humidity of the second carbon-rich gas such that it can increase the moisture content of the first CO₂-enriched material when it is contacted therewith. It is highly preferred that step (iv) comprises spraying an aqueous composition, such as water, onto the solid first CO₂-enriched material. The present inventors have found that such surface wetting is advantageous for the CO₂ sequestration efficiency. It is preferred that the humidity of the first carbon-rich gas fed to the size-reduction apparatus is controlled such that moisture content of the solid feedstock during step (iii) remains low. However even if the solid feedstock is wetted by spraying in step (iv), if dry gas is used for step (v), the solid feedstock may dry out quickly, such that additional moisture control steps are necessary to maintain the moisture content of the solid phase during step (v) at or above the second moisture content. To reduce or eliminate the need for such additional moisture control steps, it is preferred that next to spraying water in step (iv), the humidity of the first carbon-rich gas employed in step (v) is controlled such that moisture content of the wetted CO₂-enriched material during step (v) remains at or above the second moisture content. In all of the embodiments described herein, it is preferred that the second carbon-rich gas has a relative humidity (RH) of at least 70%, preferably at least 85 %, more preferably at least 95 %, such as about 100 %.

The present inventors have also found that due to the high volumes of flue gas being employed for CO₂-enrichment, moisture content of the solid feedstock, even if controlled, tends to evolve towards undesirable levels for either the size-reduction of step (iii) or the further CO₂-enrichment of step (v). A too high moisture content in the size-reduction step results in agglomeration, clogging/plugging, inefficient and inconsistent size reduction, etc. while a too low moisture content in step (v) results in decreased carbon sequestration efficiencies. Hence, it is preferred that the wetted CO₂-enriched material is maintained at a moisture content equal to or higher than the second moisture content throughout the further CO₂-enrichment treatment of step (v), and preferably the solid feedstock is maintained at a moisture content equal to or lower than the first moisture content throughout the size-reduction operation of step (iii). For the purposes of the present disclosure, to maintain at a target moisture content includes such situations where the solid feedstock deviates from the target moisture content, such deviation is detected or calculated, and corrected. In general, maintaining a certain moisture content throughout a process step should be interpreted to mean that the moisture content is within the desired range during at least 50% of the duration of the step, preferably at least 80% of the duration of the step, in particular throughout the complete duration of the step.

To maintain the wetted CO₂-enriched material at a moisture content equal to or higher than the second moisture content throughout the further CO₂-enrichment treatment of step (v) may be performed by (re)wetting the solid phase by spraying an aqueous composition such as water, or by humidifying the second carbon-rich gas which contacts the solid feedstock. As will be understood by the skilled person based on the present disclosure, in some preferred embodiments the process of the invention is provided wherein step (iv) comprises spraying an aqueous composition, such as water, on the first CO₂-enriched material to obtain wetted CO₂-enriched material having a second moisture content higher than the first moisture content, and step (v) comprises maintaining the wetted CO₂-enriched material at a moisture content equal to or higher than the second moisture content throughout the further CO₂-enrichment treatment of step (v). The moisture content of the wetted CO₂-enriched material can be maintained at a moisture content equal to or higher than the second moisture content throughout the further CO₂-enrichment treatment of step (v) for example by spraying the wetted CO₂-enriched material one or more times throughout step (v) with an aqueous composition, such as water and/or by humidifying the gas contacting the wetted CO₂-enriched material. Thus, in some embodiments of the invention step (iv) comprises spraying an aqueous composition, such as water, on the first CO₂-enriched material, and step (v) comprises spraying an aqueous composition, such as water, on the wetted CO₂-enriched material. To maintain the solid feedstock at a moisture content equal to or lower than the first moisture content throughout the size-reduction operation of step (iii) can be performed by water removal from the gas before it is fed to the size-reduction apparatus (as described herein earlier), optionally in combination with temperature control of the size-reduction operation (as described herein earlier). Humidification of a gas stream is within the routine capabilities of the skilled person and may be performed by any means, such as bubbling or sparging the gas through an aqueous composition (e.g. water), membrane-driven water-to-gas humidification, mixing the gas stream with water vapor, etc.

In some embodiments, in particular when step (iii) of the method, or steps (iii)-(v) of the method are performed continuously, step (iii) comprises steps
(iii)a continuously separating the first CO₂-enriched material into at least a first portion and a second portion, the first portion having a different average particle size than the second portion; and
(iii)b continuously recovering the first portion of CO₂-enriched material and returning the second portion to the size-reduction operation of step (iii).

Steps (iii)a and (iii)b may be performed by any suitable means known to the skilled person, including dynamic image analyser (DIA), a laser diffractor (SLS), dynamic light scatterer (DLS) and/or sieve analysis based particle size determination coupled to a means for continuously separating the CO₂-enriched material into different portions. However, the inventors have found that an air classifier allows full integration of the process with the processing of combustion flue gas or cement kiln flue gas streams as described herein elsewhere. Hence, in highly preferred embodiments of the invention, step (iii) of the method of the present invention are performed by an air classifier. Step (iii) may be performed using a size-reduction apparatus (preferably a mill, more preferably a vertical roller mill) with an integrated air classifier. Steps (iii) may also be performed using an air classifier placed downstream of the size-reduction apparatus (preferably a mill, preferably a vertical roller mill). The working principle of an air classifier is known to the skilled person, namely a forced gas flow (preferably consisting of the first carbon-rich gas provided in step (ii)) lifts milled and/or ground material out of the milling area and circulates it to the classification area where particles smaller than the cut size of the classification pass through the classifier while oversize particles are sent back to the milling area. In preferred embodiments of the invention, the gas flow through the air classifier comprises, preferably consists of, the first carbon-rich gas of step (ii). Typically, the gas flows from the milling area to the air classifier. This gives rise to a gas flow carrying the first portion of CO₂-enriched material away from the size-reduction apparatus. After removal of the CO₂-enriched material from the gas flow exiting the air classifier, the gas stream may be partially recirculated to the size-reduction apparatus, used in step (v) of the method as described herein earlier, submitted to further purification (e.g. scrubbing) it, or venting it. Step (iii)b thus preferably further comprises a solid-gas separation step to separate the first CO₂-enriched material from the gas stream. Such solid-gas separation can be performed by any means known to the skilled person. In practice simply designing the process equipment such that the gas speed slows after exiting the classifier such that particles are no longer entrained and drop out of the gas stream is sufficient, for example using a traditional dust collector. The particles can then be further moved down the process by e.g. a conveyor belt or screw conveyer, to steps (iv) and (v) of the process.

Suitable air classifiers in the context of the present invention include gravitational air classifiers, gravitational inertial air classifiers, centrifugal air classifiers, cyclonic air classifiers and/or gyrotor air classifiers. The air classifier can comprise additional means of separating the first and second portion of CO₂-enriched material. This includes, but is not limited to, spinning rejector or selector blades, filter units, and/or adjustable secondary air system for capture of near-size particles. As is known to the skilled person, an air classifier does not strictly select particles based on particle size but separates particles by a combination of size, shape and density. In practice this will result in a portion of particles with a first average particle size, and another portion of particles with a second average particle size. A difference in average particle size between the first and the second portion as referred to throughout this document may be conveniently determined by finding a difference between the D50 of the first portion and the D50 of the second portion, which is considered to indicate a difference in average particle size for the purpose of the present invention.

As will be understood by the skilled person, steps (iii)a and (iii)b are performed substantially simultaneously. In other words, the size reduction operation and continuous separation of the CO₂-enriched material into a first and second portion are continuously taking place simultaneously.

In preferred embodiments of the invention, step (iii) is performed using a vertical roller mill with an integrated air classifier, or using an air classifier placed downstream of a vertical roller mill, and the gas of step (ii) is fed to the bottom area of the vertical roller mill below the lowest roller of the mill. The bottom is the lowest part of the mill when seen in the direction of gravity.

In general, step (iii) can be performed at atmospheric pressure, below atmospheric pressure or above atmospheric pressure. Hence, in some embodiments step (iii) is performed at a pressure of more than about 100 kPa (e.g. at least 101.325 kPa). In some embodiments of the invention, step (iii) is performed at a pressure of more than about 300 kPa (e.g., 303.975 kPa), preferably more than about 600 kPa (e.g., 607.95 kPa). In alternative and preferred embodiments of the invention, in particular in case an air classifier mill is used, step (iii) is performed at a pressure below atmospheric pressure, such as a pressure of less than around 100 kPa (e.g. less than 101.325 kPa), such as less than 50 kPa or less than 10 kPa. Step (v) can also be performed at atmospheric pressure, below atmospheric pressure or above atmospheric pressure. However, step (v) is preferably performed above atmospheric pressure, such as at a pressure of more than about 100 kPa (e.g. at least 101.325 kPa), preferably more than about 300 kPa (e.g., 303.975 kPa), preferably more than about 600 kPa (e.g., 607.95 kPa).

In highly preferred embodiments of the present invention wherein steps (iii)a and (iii)b are performed, in particular in case an air classifier is employed for steps (as explained herein elsewhere), step (iii) occurs in the presence of a continuous flow comprising, preferably consisting of, the first carbon-rich gas of step (ii). In preferred embodiments, the continuous flow of the gas in the size-reduction apparatus of step (iii) is caused by a pressure difference between the gas flowing into the size-reduction apparatus (preferably the mill, such as the vertical roller mill) and the gas flowing out of the air classifier is at least 20 kPa, more preferably 50 kPa, and most preferably 100 kPa. In some embodiments, the inflowing gas stream has a pressure of more than 101 kPa, preferably more than 150 kPa, more preferably more than 300 kPa, and wherein the outflowing gas stream has a pressure of less than 80 kPa, preferably less than 50 kPa, more preferably less than 20 kPa.

In some embodiments of the invention, the method described herein is provided with the provision that the temperature and pressure during step (iii) are such that the pressure is lower than the saturated vapour pressure of water at the temperature in the size reduction operation unit.

Step (v) takes place outside of the size-reduction apparatus, after an optional step of increasing the moisture content of the first CO₂-enriched material to a second moisture content higher than the first moisture content, for example by spraying an aqueous composition such as water onto the material, as is explained herein elsewhere. The further CO₂-enrichment treatment of step (v) may be any treatment which increases the total carbon (TC) content of the optionally wetted CO₂-enriched material. In embodiments of the invention, step (v) comprises
- placing the optionally wetted CO₂-enriched material in a holding means or container in contact with, preferably under a continuous flow of, the second carbon-rich gas, wherein the contacting preferably takes place for at least 15 minutes, at least 30 minutes, or at least 1 hour;
- storing the optionally wetted CO₂-enriched material in a preferably gas-tight container in contact with the second carbon-rich gas, wherein storage preferably takes place for at least 15 minutes, at least 30 minutes, or at least 1 hour;
- feeding the optionally wetted CO₂-enriched material to a fluidized bed wherein the fluidized bed is maintained using the second carbon-rich gas; and/or
- passing a gas flow comprising the optionally wetted COz-enriched material entrained in the second carbon-rich gas one or multiple times through a catalyst bed.

Contacting the optionally wetted CO₂ enriched material with the gas in step (v) can be done with stirring or another form of agitation (preferably mild agitation), for example by employing a Continuously Stirred Tank Reactor (CSTR) or as is the case for a fluidized bed. In some preferred embodiments of the invention, step (v) comprises
- placing the optionally wetted CO₂-enriched material in a holding means or container in contact with, preferably under a continuous flow of, the second carbon-rich gas, while stirring the optionally wetted CO₂-enriched material, or rotating the holding means or container, wherein the contacting preferably takes place for at least 15 minutes, at least 30 minutes, or at least 1 hour; or
- storing the optionally wetted CO₂-enriched material in a preferably gas-tight container in contact with the second carbon-rich gas, while stirring the optionally wetted CO₂-enriched material, or rotating the container, wherein storage preferably takes place for at least 15 minutes, at least 30 minutes, or at least 1 hour.

However it is highly preferred that step (v) does not result in significant size reduction. If no stirring or mild agitation is applied, then some agglomeration may take place. Hence, recovering the second CO₂-enriched material in step (v) optionally comprises a deagglomeration step. In preferred embodiments of the invention, the ratio of the D50 of the first CO₂-enriched material recovered in step (iii), to the D50 of the second CO₂-enriched material recovered in step (v), is within the range of 0.8-1.2, preferably within the range of 0.9-1.1, more preferably within the range of 0.95-1.05.

In some embodiments of the invention, step (iii) and/or step (v) comprise contacting the feedstock with a catalyst, preferably a metal oxide catalyst, such as a transition metal oxide catalyst. Examples of suitable catalysts are selected from the group consisting of iron oxides, cobalt oxides, ruthenium oxides, titanium oxides, nickel oxides, aluminium oxides and combinations thereof. The catalyst should be suitable for increasing the CO₂ sequestration of the feedstock. In some embodiments the catalyst is selected from metal oxides for which the ratio TC_{cat}:TC₀ is more than 1.01, preferably more than 1.05 wherein TC_{cat} is the increase the total carbon content of a feedstock when a CO₂ sequestration capacity test is performed, wherein a 10 gram sample of solid feedstock is loaded into a pressure cell with 500 grams of stainless steel balls (diameter 12 mm) coated with the catalyst, followed by pressurization of the cell to 1 MPa, and rotation of the pressurized cell at 5000 RPM for 48 hours, wherein the test is performed at an ambient temperature of 20°C and no heating or cooling is applied, and wherein TC₀ is the increase the total carbon content of a feedstock when a CO₂ sequestration capacity test is performed, wherein a 10 gram sample of solid feedstock is loaded into a pressure cell with 500 grams of uncoated stainless steel balls (diameter 12 mm), followed by pressurization of the cell to 1 MPa, and rotation of the pressurized cell at 5000 RPM for 48 hours, wherein the test is performed at an ambient temperature of 20°C and no heating or cooling is applied.

The catalyst may for example be mixed with the solid feedstock, or immobilised on an inner surface, preferably a lining, of the size-reduction apparatus of step (iii) or an apparatus employed in step (v) (e.g. the tank of a continuous stirred tank reactor). The catalyst may also be immobilized on a porous support or bed which is fixed in the size-reduction apparatus in a way such that it is not submitted to the size-reduction action but allows contact with the solid feedstock, or which is fixed in an apparatus employed in step (v) (e.g. a catalyst bed placed inside piping configured to convey a gas flow comprising optionally wetted COz-enriched material entrained in the gas recovered from the size-reduction apparatus).

In accordance with preferred embodiments of the invention, the total power consumption represented by steps (iii)-(v) is less than 200 Wh per kg of second CO₂-enriched material recovered in step (v), preferably less than 175 Wh, more preferably less than 150 Wh.

The process of the present invention preferably comprises a further step (vi) of drying the second CO₂-enriched material recovered in step (v). This avoids agglomeration/lumping of the material upon long-term storage. Drying may be performed by any means known to the skilled person. Drying preferably comprises drying the second CO₂-enriched material recovered in step (v) to a moisture content of less than 8 wt.% (by total weight of the dried second CO₂-enriched material), preferably less than 5 wt.% (by total weight of the dried second CO₂-enriched material), more preferably less than 2 wt.% (by total weight of the dried second CO₂-enriched material). Drying is preferably performed by contacting the second CO₂-enriched material with a drying gas stream (preferably a continuous flow of a drying gas stream) having a temperature of less than 400 °C, preferably less than 300 °C, preferably less than 250 °C and preferably having a relative humidity (RH) of less than 50%, preferably less than 30%, most preferably less than 10%. By keeping the temperature of the drying gas below the values mentioned above, loss of the sequestered CO₂ from the CO₂-enriched material is avoided. The drying gas stream is preferably a combustion or cement kiln flue gas as described herein earlier, which has optionally been treated to reduce its humidity. In some embodiments the drying gas stream comprises the first carbon-rich gas, wherein the first carbon-rich gas comprised in the drying gas stream was obtained as a stream split-off from the first carbon-rich gas before step (iii) and/or as a portion or all of the first carbon-rich gas recovered from the size-reduction apparatus. Since in accordance with preferred embodiments of the invention, the second carbon-rich gas is a humid gas, by using the first carbon-rich gas before or after it has been used in the size-reduction apparatus, additional moisture removal from the gas stream can be avoided.

### Properties, preconditioning and pretreatment of the solid feedstock

The method of the present invention is not particularly limited with regard to the feedstock used. In order to achieve significant carbon sequestration, it is preferred that the solid feedstock provided in step (i) is a material which exhibits an increase in CO₂ content of at least 1%, preferably of at least 4% when submitted to a CO₂ sequestration capacity test wherein a 10 gram sample of solid feedstock is loaded into a pressure cell with 500 grams of stainless steel balls (diameter 12 mm) coated with titanium dioxide, followed by pressurization of the cell to 1 MPa, and rotation of the pressurized cell at 5000 RPM for 48 hours, wherein the test is performed at an ambient temperature of 20°C and no heating or cooling is applied, wherein the CO₂ content is determined as mass loss above 200°C measured by TGA employing a temperature trajectory wherein the temperature was increased from room temperature to 800°C at a rate of 10 °C/min and then decreased to room temperature at a rate of 10 °C/min or that the solid feedstock provided in step (i) is a material which exhibits an increase in total carbon content of at least 1%, preferably of at least 4% when submitted to a CO₂ sequestration capacity test wherein a 10 gram sample of solid feedstock is loaded into a pressure cell with 500 grams of stainless steel balls (diameter 12 mm) coated with titanium dioxide, followed by pressurization of the cell to 1 MPa, and rotation of the pressurized cell at 5000 RPM for 48 hours, wherein the test is performed at an ambient temperature of 20°C and no heating or cooling is applied.

In preferred embodiments of the invention, the solid feedstock provided in step (i) comprises a mineral and/or elemental carbon. In some embodiments, the feedstock comprises CaO and/or Ca(OH)₂, preferably the feedstock comprises at least 0.1 wt.% (by total weight of the feedstock) CaO and/or Ca(OH)₂, preferably at least 0.5 wt.% (by total weight of the feedstock) CaO and/or Ca(OH)₂

In some embodiments the solid feedstock provided in step (i) comprises one or more of coal combustion products (in particular fly ash or bottom ash), graphene, graphite, clay, shale, silicate minerals, glass (in particular soda-lime glass or borosilicate glass), iron or steel-making slags, wood, limestone, calcite, amosite, brucite, natural pozzolan, volcanic rock, biochar, pyroxenes, hydrous magnesium silicates, talc, serpentines, serpentinite, peridotite, olivine, borosilicate glass, volcanic ash, perlite, pumice, obsidian, scoria, tuffs (e.g. rhyolite tuffs, dacite tuffs, basaltic tuffs, trachytic tuffs, phonolitic tuffs, digenetic lithoid tuffs), andesite, clinoptiololite, heulandite, augite, apatite, titanite, biotite, hauynite, nosean, sodalite, magnetite, muscovite, chabazite, analcite, hematite, cristobalite, tripoli, kaolinite, illite, mica, hornblende, mordenite, andesites, basalt, diatomite, tripoli, cherts, dolomite, forsterite, monticellite, wollastonite, diopside, enstatite, lizardite, potassium and sodium feldspars, antigorite, chrysotile, opaline shales, hydraulic cement, slaked lime, concrete, mafic or ultramafic mining tailings and zeolites, preferably selected from serpentinite, peridotite, basalt, volcanic rock, perlite, zeolites, soda-lime glass, bottom ash, coal fly ash, oil fly ash, coal fly ash, subbituminous coal fly ash, anthracite coal fly ash, bituminous coal fly ash, blast furnace (BF) slag (such as air-cooled blast furnace (ACBF) slag or water cooled blast furnace slag), granulating blast furnace (GBF) slag, basic oxygen furnace (BOF) slag, ladle furnace basic slag (LS), electric arc furnace (EAF) flag, and mafic or ultramafic mining tails. The furnace slags may be from ferrous metal production, non-ferrous metal production or phosphorous production, preferably from ferrous metal production. Most preferred are the slag feedstocks recited herein.

In preferred embodiments of the present invention, the feedstock is not pre-treated with acid.

In some embodiments of the invention, step (i) comprises preconditioning the solid feedstock by contacting it with the gas stream of step (ii)a, or the first or second carbon-rich gas of step (ii). In preferred embodiments, preconditioning is performed without simultaneously effecting a size-reduction of the feedstock. For example, the feedstock can be stored with a continuous flow of the gas. Alternatively, the feedstock can be stored in a gas-tight container in the presence of the gas. Preconditioning the solid feedstock can be done with mild agitation which does not result in a significant size-reduction of the solid feedstock, for example in a Continuously Stirred Tank Reactor (CSTR).

In preferred embodiments of the present invention, the solid feedstock of step (i) which is fed to step (iii) has a D95 before the size-reduction of step (iii) which is less than 20 mm, preferably less than 15 mm, more preferably less than 10 mm, most preferably less than 4 mm. For example, the D95 may be in the range of 3-7 mm. In some embodiments of the invention, the D95 before the size-reduction of step (iii) is in the range of 1-20 mm, preferably in the range of 2-15 mm, more preferably in the range of 3-10 mm such as 3-7 mm. The D95 described in this paragraph concerns the mass-based D95 determined by sieve analysis.

In some embodiments of the invention, the solid feedstocks may comprise large solid pieces which may require a pre-processing step to achieve particle sizes that are appropriate for feeding into the size-reduction apparatus employed in step (iii), such as the vertical roller mill. Such appropriate particle sizes are mainly determined by the presence of over-sized particles as reflected by the D95 (e.g. mass based determined by sieve analysis) explained above. Hence, in preferred embodiments of the invention, step (i) comprises a pre-treatment of the feedstock comprising the steps of:
(i)a providing a solid material having a first D95; and
(i)b subjecting the solid material of step (i)a to a size-reduction operation, thereby obtaining a solid feedstock having a second D95 which is smaller than the first D95.

In such embodiments, the size-reduced material of step (i)b is the solid feedstock which is fed to step (iii). In some embodiments the solid material provided in step (i)a has a D95 of more than 10mm, such as more than 15 mm or more than 20 mm. The size-reduction operation of step (i)b is preferably performed using a different size-reduction apparatus than the size-reduction apparatus of step (iii). It is preferred that step (i)b is performed by hammer milling, while step (iii) is preferably performed by vertical roller milling.

The D95 described in this paragraph concerns the mass-based D95 determined by sieve analysis.

### Properties of the CO₂-enriched materials obtained

In preferred embodiments of the invention, the method described herein is provided wherein the second CO₂-enriched material recovered in step (v), has one, two, three or four, preferably four of the following characteristics:
- a D10 within the range of 0.005 to 3 µm;
- a D50 within the range of 0.1 to 100 µm, preferably within the range of 0.1 to 40 µm, more preferably within the range of 1-40 µm, most preferably within the range of 5-40 µm;
- a D90 within the range of 0.5 to 300 µm
- a BET surface area within the range of 0.5 to 10000 m2/g, preferably within the range of 1-2000 m2/g.

In all embodiments it is preferred that the D50 is as specified above, since this is the most important size characteristic influencing overall performance. Since the second CO₂-enrichment treatment of step (v) preferably takes place without significant size reduction (at most maintaining a mild agitation to avoid agglomeration, as explained herein before), the first CO₂-enriched material recovered in step (iii) preferably complies with the same particle size and surface area characteristics.

In some embodiments the BET surface area of the second CO₂-enriched material recovered in step (v) is within the range of 50-2000 m²/g. In alternative embodiments the BET surface area of the second CO₂-enriched material recovered in step (v) is within the range of 1-50 m²/g.

Without wishing to be bound by any theory, the present inventors believe that the sequestration methods of the invention when applied to materials such as graphite, allow platelet-like morphology to be maintained. This is observed by platelet thickness being maintained. Hence, in embodiments of the invention (in particular those embodiments where the feedstock of step (i) comprises or is graphite), the COz-enriched material recovered in step (v) has a platelet morphology and has a platelet thickness of more than 10 nm, preferably more than 20 nm, more preferably more than 50 nm. The platelet thickness as referred to herein is preferably determined by calculating the average platelet thickness determined by Transmission Electron Microscopy on all particles for which the platelet thickness can be determined in a random field of view of 25x25 micron recorded from a random sample of a homogenized batch of material.

The process of the invention is preferably performed such that the ratio of the CO₂ content of the second CO₂-enriched material recovered in step (v) to the CO₂ content of the solid feedstock of step (i) is at least 1.5:1, preferably at least 3:1, more preferably at least 10:1, wherein the CO₂ content is determined as mass loss above 200°C measured by TGA employing a temperature trajectory wherein the temperature was increased from room temperature to 800°C at a rate of 10 °C/min and then decreased to room temperature at a rate of 10 °C/min. Similarly, the carbon sequestration treatment of steps (iii)-(v), in particular in case the feedstock is selected from non-carbonaceous materials such as the minerals, slags and glass described herein earlier, is preferably performed such that the ratio of the total carbon content of the second CO₂-enriched material recovered in step (v) to the total carbon content of the solid feedstock of step (i) is at least 1.05:1, preferably at least 1.1:1, more preferably at least 1.2:1.

Without wishing to be bound by any theory, the present inventors believe that the BET surface area increase effected by the carbon sequestration process may largely be attributed to an increase in the number of pores, observed by a decrease in the average pore width and an increase in the total pore surface area. Hence, in embodiments of the invention, process of the invention is preferably performed such that the BJH desorption cumulative surface area of pores of the CO₂-enriched material recovered in step (v) is at least 110%, preferably at least 120%, more preferably at least 150%, of the BJH desorption cumulative surface area of pores of the solid feedstock of step (i) and the desorption average pore width (4V/A by BET) of the second CO₂-enriched material recovered in step (v) is no more than 90%, preferably no more than 85%, more preferably no more than 80%, of the desorption average pore width (4V/A by BET) of the feedstock of step (i). Without wishing to be bound by any theory, the inventors believe that the increase in the number of pores is mainly effected in step (iii) and increases the diffusion rate of CO₂ into the solid feedstock, increasing their susceptibility for the further CO₂-enrichment treatment of step (v). In other words, steps (iii) of the invention is believed to activate the feedstock, thereby increasing the efficacy of the further CO₂-enrichment treatment of step (v).

In embodiments of the invention, the ratio of the CO₂ content of the second CO₂-enriched material recovered in step (v) to the CO₂ content of the first CO₂-enriched material recovered in step (iii) is at least 1.5:1, preferably at least 3:1, more preferably at least 10:1, wherein the CO₂ content is determined as mass loss above 200°C measured by TGA employing a temperature trajectory wherein the temperature was increased from room temperature to 800°C at a rate of 10 °C/min and then decreased to room temperature at a rate of 10 °C/min. Similarly, step (v) as described herein is preferably performed such that the ratio of the total carbon content of the further CO₂-enriched material recovered in step (v) to the total carbon content of the first CO₂-enriched material recovered in step (iii) is at least 1.05:1, preferably at least 1.1:1, more preferably at least 1.2:1.

### Examples

A specific implementation of a process according to the invention is shown in Figure 1, described in Example 1. This example concerns a method for the production of CO₂-enriched material according to the invention wherein step (iii) of the method is performed via milling in an air classifier mill, followed by a further CO₂-enrichment treatment step (v) which comprises storing the CO₂-enriched material in a container under a continuous flow (bubbling) of flue gas.

### Example 1

First, a solid feedstock (e.g. aluminosilicates, fly ash, steel slag, natural pozzolans, volcanic rocks, clay or glass) is fed from the feed inlet (1) to the feed hopper (2). An optional step (not shown) of continuous mechanical crushing step (e.g. using a hammer mill) followed by screening to remove oversize may be performed between the feed inlet (1) and the feed hopper (2). The feedstock fed to the feed hopper has a D95 (mass-based determined by sieve analysis) of less than 4 mm. The feedstock is transferred to a continuous mill equipped with a classifier (4) (a vertical roller mill with an integrated air classifier) via a screw auger (3). The mill is equipped with a dynamic swirl cage classifier. The flue gas enters the process via an inlet (5) at temperatures within the range of 150-200 °C. The flue gas is split into a first portion which is mixed with 15-25 vol% of ambient air and fed to the mill, and a second portion which is passed through a cooler (6) which reduces the temperature of the flue gas to less than 100 °C by heat-exchange with ambient air, without mixing with the air. The cooled flue gas of the second portion then enters a first liquid gas separator (7) to reduce the water content of the flue gas. Next, the feedstock from the screw auger (3) is milled in the continuous mill (4) using the flue gas exiting the liquid gas separator (7) to drive the air-classifier mill. A cooling glycol loop (8) comprising an air-cooled heat-exchange unit (9), a surge tank (10), and a glycol pump (11), controls any exotherms during the milling process. The classifier continuously returns a portion of CO₂-enriched material to the continuous mill (4) for further milling. The portion of CO₂-enriched material passing through the classifier has a particle size characterized by a D50 in the range of 20-30 micron and is carried by the flue gas stream to a solid-gas separator (12) (a dust collector). The CO₂-enriched material is sent from the dust collector to a bubbling column (13) via a screw auger (14) for further CO₂-enrichment treatment outside the mill. The screw augur is equipped with a spray bar (20) which optionally increases the surface moisture, such that the overall moisture content of the material submitted to the further CO₂-enrichment treatment is within the range of 12-15 wt.%. The flue gas used in the bubbling column (13) originates from the first liquid gas separator (7) which passes through a compressor (15), a second cooler (16) and a second liquid gas separator (17). The residence time of the CO₂-enriched material in the bubbling column is at least 1 hour. The CO₂ enriched material is then stored in a storage silo (18) and discharged as necessary. The flue gas exits the process through the flue gas outlet (19) where it is ultimately collected for further processing or vented to the atmosphere.

### Example 2

The process of example 1 is performed wherein instead of a bubbling column, a gently stirred tank or silo containing a flue gas atmosphere is used for the further CO₂-enrichment treatment outside the mill.

### Example 3

The process of example 1 or 2 is performed wherein a preconditioning step is performed wherein the feedstock having a D95 (mass-based determined by sieve analysis) of less than 4 mm (i.e. after the optional crushing step if the feedstock was too large) is fed to a gently stirred tank or silo containing a flue gas atmosphere.

### Example 4

The influence of the moisture content of the solid phase and of the humidity of the second carbon-rich gas on the carbonation efficiency of basic oxygen furnace slag (BOF) was investigated. BOF was ball milled in a fossil fuel combustion flue gas atmosphere (4 vol% CO₂, 100% RH; "the first treatment") to a D50 within the range of 20-30 micron. The milled material was placed in a temperature-controlled container under a continuous flow of flue gas (4 vol% CO₂, temperature and humidity controlled as per below table; "the second treatment"). No agitation was applied. Particle size and moisture content were determined in accordance with the methods defined herein earlier. The CO₂ uptake (wt.%) is determined by comparing the CO₂ content after the first CO₂-enrichment treatment but before the second CO₂-enrichment treatment, with the CO₂ content after the second CO₂-enrichment treatment, wherein the CO₂ content is determined as mass loss above 200°C measured by TGA employing a temperature trajectory wherein the temperature was increased from room temperature to 800°C at a rate of 10 °C/min and then decreased to room temperature at a rate of 10 °C/min. All parameters not described were held constant.

| **Ex.** | **Moisture content during first treatment** | **Particle size range** | **Moisture content during second treatment** | **Temperature during second treatment** | **Flue Gas Relative humid.** | **Duration second treatment** | **CO₂ Uptake second treatment** |
|---|---|---|---|---|---|---|---|
| Ex. 1 | <5 wt.% | D50=24µm | <5 wt.% | 80 °C | <10% | 2h | 1.89% |
| Ex. 2 | <5 wt.% | D50=24µm | <5 wt.% | 80 °C | 100% | 2h | 2.67% |
| Ex. 3 | <5 wt.% | D50=24µm | >17.5% | 80 °C | <10% | 2h | 4.39% |
| Ex. 4 | <5 wt.% | D50=24µm | <5 wt.% | 40 °C | 100% | 2h | 6.64% |
| Ex. 5 | <5 wt.% | D50=24µm | >10 wt.% | 40 °C | 100% | 2h | 9.13% |
| Ex. 6 | <5 wt.% | D50=24µm | >15 wt.% | 40 °C | 100% | 2h | 9.34% |

Similar tests were performed wherein the flue gas had a temperature of 60 °C, and it was found that the carbonation efficiency of the second treatment (as determined by the CO₂ uptake) was similar to the values achieved for 80 °C.

## Claims

1. A method for carbon sequestration comprising the steps of:
(i) providing a solid feedstock having a first moisture content;
(ii) providing a first carbon-rich gas comprising at least 1 vol% CO₂ and a second carbon-rich gas comprising at least 1 vol% CO₂;
(iii) subjecting the solid feedstock of step (i) in a size-reduction apparatus to a size-reduction operation in the presence of the first carbon-rich gas of step (ii) to obtain a first CO₂-enriched material and recovering the first CO₂-enriched material;
(iv) optionally increasing the moisture content of said first CO₂-enriched material to a second moisture content higher than the first moisture content to obtain wetted CO₂-enriched material;
(v) submitting the optionally wetted CO₂-enriched material to a further CO₂-enrichment treatment outside the size-reduction apparatus by contacting it with the second carbon-rich gas comprising at least 1 vol% CO₂; to obtain a second CO₂-enriched material and recovering the second CO₂-enriched material;
wherein step (ii) comprises the steps
(ii)a providing a gas stream comprising at least 1 vol% CO₂ and having a temperature of more than 120 °C, which is combustion flue gas or cement kiln flue gas;
(ii)b splitting the gas stream of step (i)a into a first portion and a second portion;
(ii)c cooling said first portion, the cooling comprising mixing the first portion with air, thereby obtaining the first carbon-rich gas; and
(ii)d cooling said second portion, thereby obtaining the second carbon-rich gas;
wherein the CO₂ content of the first carbon-rich gas is lower than the CO₂ content of the second carbon-rich gas,
wherein steps (ii)c and (ii)d each optionally comprise a step of adjusting the humidity of the gas.

2. The method of claim 1 wherein the temperature of the second carbon-rich gas is below 120 °C.

3. The method of claim 2 wherein the temperature of the first carbon-rich gas is higher than the temperature of the second carbon-rich gas.

4. The method of any one of the previous claims wherein less than 70 vol%, more preferably less than 60 vol%, more preferably less than 50 vol% of the first carbon-rich gas constitutes the gas of the first portion.

5. The method of any one of the previous claims, preferably of claim 4, wherein at least 70 vol%, more preferably at least 80 vol%, more preferably at least 95 vol% of the second carbon-rich gas constitutes the gas of the second portion.

6. The method of any one of the previous claims wherein the air provided in step (ii)c for mixing with the first portion has a temperature lower than the temperature of the gas stream provided in step (ii)a, such as a temperature of less than 80 °C, preferably a temperature of less than 40 °C.

7. The method of any one of the previous claims wherein step (iv) comprises spraying an aqueous composition, such as water, on the first CO₂-enriched material.

8. The method of any one of the previous claims wherein recovering the second CO₂-enriched material in step (v) optionally comprises a deagglomeration step, and wherein the ratio of the D50 of the first CO₂-enriched material recovered in step (iii), to the D50 of the second CO₂-enriched material recovered in step (v), is within the range of 0.8-1.2, preferably within the range of 0.9-1.1, more preferably within the range of 0.95-1.05.

9. The method of any one of the previous claims wherein the further CO₂-enrichment treatment of step (v) comprises:
• placing the optionally wetted CO₂-enriched material in a holding means or container in contact with, preferably under a continuous flow of, the second carbon-rich gas, wherein the contacting preferably takes place for at least 15 minutes, at least 30 minutes, or at least 1 hour;
• storing the optionally wetted CO₂-enriched material in a preferably gas-tight container in contact with the second carbon-rich gas, wherein storage preferably takes place for at least 15 minutes, at least 30 minutes, or at least 1 hour;
• feeding the optionally wetted CO₂-enriched material to a fluidized bed wherein the fluidized bed is maintained using the second carbon-rich gas; and/or
• passing a gas flow comprising the optionally wetted COz-enriched material entrained in the second carbon-rich gas one or multiple times through a catalyst bed.

10. The method of any one of the previous claims wherein the first moisture content is less than 8 wt.% (by total weight of the solid feedstock), and wherein the second moisture content is more than 10 wt.% (by total weight of the wetted CO₂-enriched material).

11. The method of claim 10 wherein the second moisture content is less than 35 wt.% (by total weight of the wetted CO₂-enriched material), preferably less than 27 wt.% (by total weight of the wetted CO₂-enriched material), most preferably less than 20 wt.% (by total weight of the wetted CO₂-enriched material).

12. The method of any one of the previous claims wherein the solid feedstock is maintained at a moisture content equal to or lower than the first moisture content throughout the size-reduction operation of step (iii) and wherein the wetted CO₂-enriched material is maintained at a moisture content equal to or higher than the second moisture content throughout the further CO₂-enrichment treatment of step (v).

13. The method of any one of the preceding claims wherein step (v) is performed at a temperature within the range of 30-85 °C, preferably 30-55 °C, most preferably 35-50 °C.

14. The method of any one of the previous claims wherein the size-reduction operation of step (iii) is performed by subjecting the solid feedstock of step (i) in the presence of the first carbon-rich gas to milling, preferably to ball milling, roller milling, basket milling, hammer milling, rotor-stator milling, pin milling, jet milling and/or rod milling, preferably to roller milling.

15. The method of any one of the previous claims wherein step (iii) is performed by a mill with an integrated air classifier, or by a mill with an air classifier placed down-stream of the mill, wherein the gas flow through the air classifier comprises, preferably consists of, the second carbon-rich gas, and wherein the gas flows from the mill to the air classifier.
